# EUROPEAN PATENT SPECIFICATION

(11) **EP 2 894 464 B1**
(45) Date of publication and mention of the grant of the patent: **10.11.2021**
(21) Application number: 14000090.2
(22) Date of filing: 10.01.2014
(51) Int. Cl.: G01F 1/684, G01F 1/692, G01F 1/698, G01N 27/12

(54) **Microsensor for gas flow and concentration measurements**
Mikrosensor für Gasstrom- und Gaskonzentrationsmessungen
Microcapteur de mesures de concentration et de flux de gaz

(43) Date of publication of application: 15.07.2015
(73) Proprietor: Sensirion AG, 8712 Stäfa (CH)
(72) Inventor: Stark, Wendelin Jan, 8049 Zürich (CH)
(74) Representative: Mirza, Akram Karim

(56) References cited:
- WO-A2-02/44704
- DE-A1-102011 003 291
- US-A1- 2013 081 445
- None

## Description

### Technical Field

The present invention relates to a microsen-sor for gas flow and concentration measurement, particularly for integration into a CMOS circuit and related methods of measuring concentrations and/or flow rates.

### Background of the Invention

WO 02/44704 A2 discloses a catalytic adsorption and oxidation based Carbon Monoxide sensor and detection method.

DE 10 2011 003 291 A1 discloses a gas sensor and an operating method thereof.

Various devices are known which use the heat transfer between a heated element such as a wire and a fluid flowing around the heated element to determine flow properties and material properties of the flow components. Examples of such devices include the so-called Pirani gauge. Other examples, described for example in the co-owned United States patent applications US 2004/0099057 and US 2010/0089118, use a heat source located between two temperature probes to determine flow rates and composition parameters.

Catalytic gas sensors are described for example in the United States patent no. 5813784 and in the German published patent application DE 102007057500 A1. The latter describes a heat flow measurement as alternative to the catalytic measurement.

A calorimetric sensor using an adsorbent layer is described for example in the United States patent no. 76338640 B2 where a heat flux measurement between a sensor cell and a reference cell is used to determine the temperature difference between the sensor cell and the reference cell.

US 2013/0081445 A1 discloses a sensor which allows determination of the concentration of a gas in a two-component mixture at variable pressure by measuring the diffusivity and the thermal conductivity.

In the light of the above, it is seen as an object of the invention to provide robust, easy to manufacture and controllable sensors for fluid flow and fluid concentration measurements.

### Summary of the Invention

In accordance with a first aspect of the invention there is provided a sensor comprising on a substrate one or more heating elements in thermal contact with one or more adsorbing layers and a controller for operating the one or more heating elements and the one or more adsorbing layers in a flow measuring mode and/or in an desorption mode.

Even though the processes of adsorption and absorption are distinct, the term "adsorbing layer" is used herein to refer to layers designed to adsorb or absorb the species the carbon dioxide concentration of which should be measured. Similarly a process described herein as adsorption may in fact be more accurately characterized as absorption and vice versa. It should be understood that for the purpose of the present invention the distinction between both processes is not material and the principles of this invention apply to both processes.

In the flow measurement mode the controller is preferably configured to detect essentially deviations between an actual temperature response, more preferably an actual maximum temperature, from a nominal temperature response, more preferably a nominal maximum temperature, of the adsorbing layer to a heat pulse applied to it.

In the concentration measurement mode the controller is preferably configured to detect essentially slopes or gradients and deviation from a nominal curve of a temperature response of the adsorbing layer to a heat pulse applied to it.

The controller is preferably configured to operate the adsorbing layer at at least two different temperature levels with both levels preferably different from ambient temperature. One of the levels is set close or preferably higher than the desorption temperature of the flow component the concentration of which is to be measured. In a preferred variant of this embodiment, the sensor is preferably operated in the flow measuring mode at a temperature T_low, which is lower than the temperature T_high applied in the desorption mode. The desorption mode and the temperature T_high is designed to determine the concentration of a fluid component based on its desorption characteristic after such a component is being adsorbed onto or absorbed within the adsorbing layer.

The controller is best designed to operate the heaters for longer periods tf as flow sensors and for burst periods td of a shorter duration as concentration sensor. A burst period and hence a desorption measurement can be initiated in dependence of measurements as performed during a prior flow measurement. The two modes are best operated in pulsed manner.

The adsorbing layer is preferably a highly porous material. The porosity of the layer can be for example 50 per cent of its total volume. An example of a porous material for use as adsorbing or absorbing layer material is a zeolite, particularly potassium doped zeolites. The latter material and similar materials described for example IN: Cheng-Hsiu Yu, Chih-Hung Huang, Chung-Sung Tan, "A Review of CO2 Capture by Absorption and Adsorption", Aerosol and Air Quality Research, Volume 12, pages 745-769, 2012, are of particular use when operating the sensor as carbon dioxide sensor.

The desorption process is an endothermal process such that energy is required to release the adsorbed or absorbed species from the surface or bulk of the adsorbing layer.

The sensor layers and heat sources are preferably mounted on a single semiconductor substrate or on several pieces of semiconductor material bonded together. It is particularly preferred to mount sensor layers and heat sources in a thinner region of the substrate, e.g. on a membrane. In particular, it can be advantageous to combine the above sensor elements with further electronic components on a single semiconductor substrate to form an integrated sensor device. The electronic components can include analog and digital components, preferably both, together with a bus to transfer data and instruction to and from the chip. The electronic components are best implemented as CMOS circuits.

As the above sensor consists essentially of only a few components, it is possible to combine several of such sensors as sensor pixels within a larger sensor array. In such a configuration it is preferred to use adsorbing layers showing different adsorbing characteristics thus facilitating the detection of multiple flow components.

These and further aspects of the invention are described in the following detailed description making reference to the drawings. Further all embodiments of the present invention concerning a method might be carried out in the order of the steps as described. Nevertheless this has not to be the only essential order of steps but all different orders of the method steps where technically feasible shall be comprised in the scope of the claims and be disclosed by the method claims.

### Brief Description of the Drawings

The following detailed description makes reference to the annexed drawings, wherein:
FIGs. 1A and 1B is a schematic top view and a schematic cross-section, respectively, of a sensor in accordance with an example of the invention;
FIG. 2 illustrates a desorption process in accordance with an example of the invention;
FIGs. 3A - 3C illustrate a method of operating a sensor in accordance with an example of the invention; and
FIGs. 4A,4B are schematic diagrams of circuits for evaluating measurements as performed by sensors in accordance with an example of the invention.

### Detailed Description

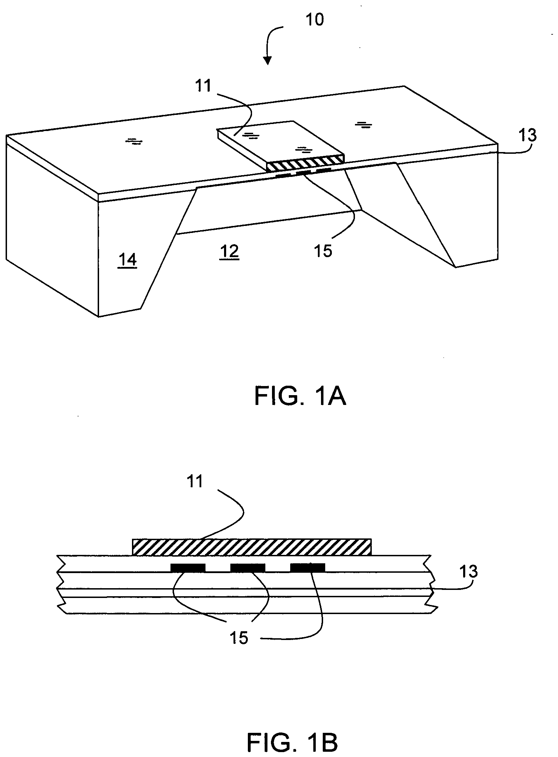

A gas sensor 10 with a sensing layer 11 of a porous materials such as zeolite is shown in FIGs. 1A and 1B. The sensor is integrated with a CMOS circuitry (not shown) on a single chip. Parts of the CMOS layers 13 and handle layer 14 required for the CMOS circuit are etched away to form a MEMS device with a cavity 12 at the location of the sensor. The remaining layers 13 above the cavity 12 form a thin membrane to support the actual sensor 10.

Conducting elements forming a heater 15 to provide a local source of heat to heat the porous layer 11 during operation of the sensor are embedded within the layers 13. The heating elements can be made for example from tungsten, platinum, or their alloys.

The membrane structure above the cavity 12 provides an inherent thermal insulation for the rest of the substrate with the CMOS circuit. Also, the temperature can rise rapidly around the porous layer 11, while the thicker part of chip reacts due to its thermal inertia with a slower rise of temperature. By controlling the heater accordingly, the porous layer can be heated to operating temperature of 200 to 300 degrees Celsius while the temperature of the CMOS layer remains below the critical limit for operation, typically about 80 degrees Celsius.

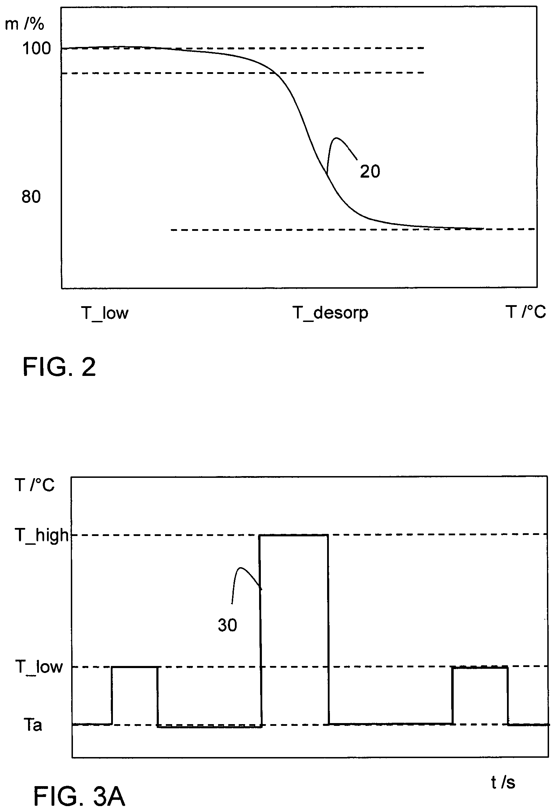

A desorption process is illustrated in FIG. 2 showing the mass of the porous layer 11 during a transition from a low flow rate measurement temperature T_low at around 20°C to a desorption temperature T_desorp of around 130 ° C. The mass of the porous layer 11 reduces through the heating due to an evaporation of the adsorbed components from 100% to around 75%.

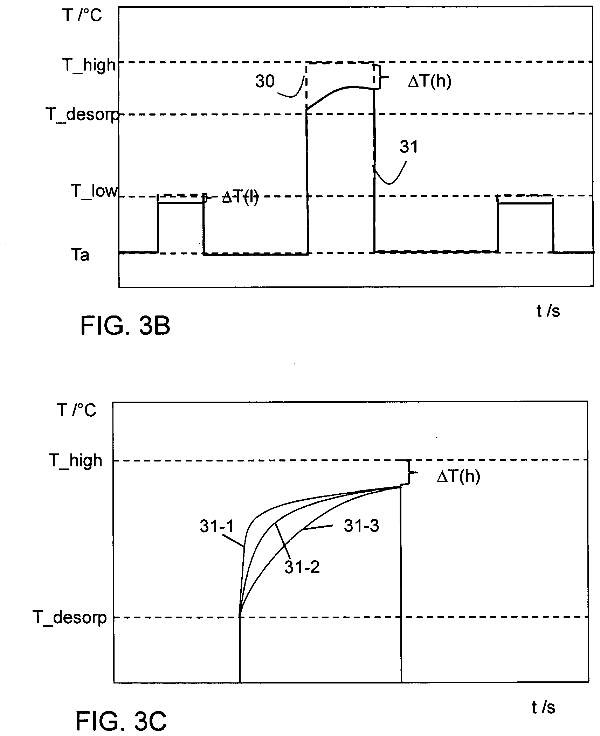

A sequence of measurements is illustrated in FIG. 3. The temperature is controlled to vary essentially between three levels. The lowest level is the ambient temperature Ta. The temperature level for flow measurements is indicated as line T_low. The temperature level for gas concentration measurements is indicated as line T_high. It should be noted that the desorption temperature T_high as applied during measurement can be chosen different from the physical desorption temperature T_desorp shown in FIG. 2. A higher temperature can be for example chosen to ensure that the desorption process removes all adsorbed molecules.

A controller is programmed to cycle the sensor along a default temperature curve 30 including a sequence of pulses from the ambient temperature Ta to the flow measurement temperature T_low and pulses from the ambient temperature Ta to the desorption measurement temperature T_high. In FIG. 3 the pulses are shown in an alternating sequence with equal duration. However sequence does not have to be alternating and can involve for example a number of subsequent pulses for flow measurement followed by a single pulse for concentration measurement. It is further possible to vary the duration of the pulses between both modes and/or for the pulses of one of the modes.

A controller can further be programmed to react to thresholds or other parameters linked to one measurement such as a flow measurement to initiate a pulse for the concentration measurement.

The modification of the temperature curve 30 of FIG. 3A due to the presence of a flow and an adsorbed species is shown in FIG. 3B. The nominal temperature curve 30 is shown as dashed line whilst the measured curve 31 is shown as solid line. As shown in FIG. 3B, in the presence of fluid flow the curve 31 diverges from the nominal curve 30 in two main aspects. Using the same energy input to the heaters to generate the default sequence of temperature pulses, there is a difference ΔT(l)between the temperature reached in the presence of flow compared to the temperature reached without flow.

The difference ΔT(l) is caused by cooling effects of the flow. The cooling effect due to the flow of the medium is also visible in the temperature difference ΔT(h) at the peak of the pulse for concentration measurements. For details of measuring such a flow from a single sensor reference is made to the co-owned United States patent applications US 2004/0099057 and US 2010/0089118 as cited above.

Around and above the desorption temperature T_desorp however additional heat is carried away from the sensor due to the desorption of the fluid component adsorbed on the adsorbing layer 11. This leads to a slower rise or lower gradient of the temperature curve 31 in the region of the peak of the pulse for concentration measurements. The slope of the curve 31 and its deviation from the nominal curve 30 in this region represents a measure of the amount of desorbed species due to the heat carried away as desorption energy, which in turn is related to the amount of initially adsorbed species (during the times at which the adsorbing layer is below T_desorp), which again is related to the concentration of the species in the flow.

To perform the measurement a relation between the difference ΔT(l) and ΔT(h) can be used. For simplicity the relation can be approximated by assuming that both difference are equal, e.g., ΔT(l) = ΔT(h) or, more accurately, linked through a predefined correction factor C, i.e., ΔT(l) = ΔT(h)*C. The correction factor can be gained using the simplifying assumption that C depends mostly on differences in heat transfer between layer and fluid at the two levels T_low and T_high. For more accurate measurements the relationship can be derived from a calibrations step or a model. Under certain flow conditions, such as low flow, the shift in temperature ΔT(h) at the desorption pulse may be completely neglected for the concentration measurements.

In FIG. 3C a measurement is illustrated with flows of three different levels of concentrations of the flow component to be measured. The measurements, when feeding the heater with the heat energy for the nominal temperature curve 30 results at a temperature above the desorption temperature T_desorp in three different curves 31-1, 31-2, 31-3. Typically the higher the concentration of the flow component to be measured the slower the rise in temperature and the further the curve deviates in this section from the nominal curve 30.

It should be noted that the flow rate can be determined solely from an analysis of the shape and, in particular, from the asymptotic behaviour of the curve 31 at the peak of the pulse for concentration measurements, i.e., solely from estimates of the difference ΔT(h) even in the presence of desorbing material. For example the pulse duration for the concentration measurement can be extended until the curve 31 exhibits asymptotic behaviour or by applying a filter which predicts the asymptotic behaviour of curve 31 from its initial part of the sloping sections(e.g. 31-1, 31-2, 31-3 in FIG. 3C).

However the exact nature of these relationships vary between different fluid species and adsorbing layers 11 and other flow conditions. Thus exact evaluation of the concentration includes for example a prior calibration or prior knowledge of an accurate model of the adsorption/desorption process to transform the transient temperature curve measurements into measurements of concentration.

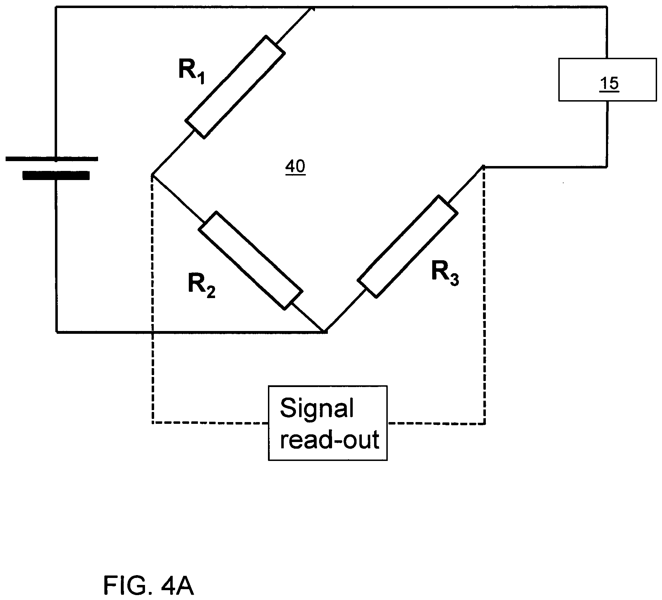

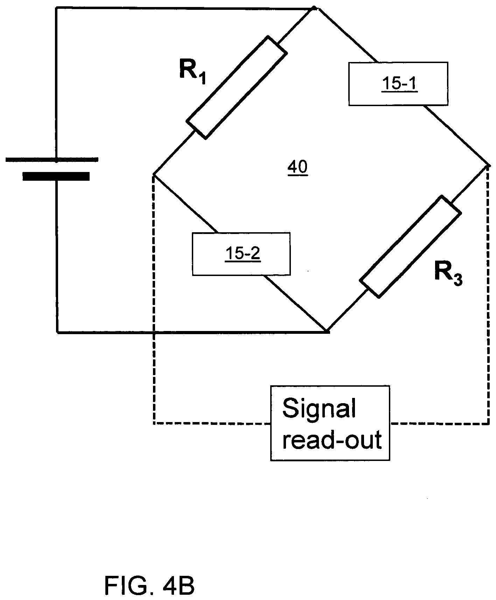

The temperature to acquire the temperature curves described above can be measured using temperature sensors such as thermopiles thermally coupled to the layer 11. In addition or alternatively the temperature can be determined using the temperature dependence of the resistance of the heater elements 15 in the sensor. The resistance measurement can be performed in a manner known per se by integrating the heater elements in a Wheatstone bridge 40 as shown in FIGs. 4A and 4B below or any method equivalent thereto.

In FIGs. 4A and 4B the resistance of the heater elements 15 is determined as the voltage drop across the two branches of the Wheatstone bridge 40. By changing one of the resistors R1, R2, R3 the voltage drop can be reduced to zero yielding the resistance of the heater 15. Whilst the example of FIG. 4A shows one sensor 15 in the bridge 40, in FIG. 4B two sensors 15-1,15-2 in accordance with examples of the invention are integrated into the bridge 40 with sensor 15-2 replacing the resistor R2 of FIG. 4A. Both sensors are advantageously built with equal or essentially equal specification thus doubling the measured signal.

To provide an example of the energy consumption the dimensions of the supporting membrane are assumed to be 100 × 100 micrometers with the heating element covering an area of 50 × 50 micrometers and with an area covered by the nanoporous adsorber on the sensor element of 50 × 50 micrometer. The thickness of the nanoporous adsorbing layer can be 5 micrometer or typically in the range of 1-20 micrometers. The void fraction of the porous layer is 50% and its bulk density 2000 kg/m3 with a typical zeolite material as example. The thermal mass per area of sensor amounts to 5 gram of adsorber per m2 sensor area. Per pixel this mass has to be multiplied by the pixel area as above and amounts to 12.5 nanograms.

The mass of adsorbed gas in the layer can be estimated as being typically 0.1 to 20 wt% with respect to the weight of adsorber.

The mass of adsorbed gas in a single sensor pixel during a detection event is hence 10 picogram to 2.5 nanogram gas or volatile organic compound.

The typical energies involved in ad- and desorption to ad/desorb a gas from a nanoporous layer from a single sensor pixel can be estimated as E (single pixel) = (mass (gas)/molecular mass) × molar absorption enthalpy = 0.1 to 2 micro-Joule.

The heat transfer caused by the fluid flow is assumed to be laminar with typical heat transfer coefficients for laminar flow being 1-10 W/(m2 K) and can amount to up to 1500 W/m2 assuming a temperature difference of 150 °C. Per sensor pixel, the area is 2.5 10-9 m2 and hence the heat loss by gas flow can be estimated as being up to 3.75x10-6 W. Thermal energy lost during measurement due to gas movement (i.e. with the sensor pixel being used as a flow sensor)is about 0.01 to 0.1 seconds × 3.75 microWatts = 0.04 to 0.4 microJoule.

The time periods to measure a desorption event depend on the layer and the species monitored and can be in the range of 0.01 to 0.1 seconds.

At low concentrations of adsorbed gas, and high gas flow rate, it can be assumed that the gas flow (i.e. heat loss due to gas flow) is not altered over the short period of the desorption pulse and hence ΔT(h) can be set to equal ΔT(l)×C. At high concentrations of adsorbed gas, or using slower gas flow (e.g. by applying a smart inlet design), the assumption that the gas flow (i.e. heat loss due to gas flow) is constant over the short "burst" period is of minor influence to the measuring event, as the signal from the desorption is larger than the heat loss due to conduction. As a result, a more robust measurement is possible.

Using an air flow of air at 1 mm/sec and the above geometry, the heat loss over the 50 × 50 micrometer pixel can be estimate to be in the order of 2 microWatts.

## Claims

1. A sensor (10) for determining the concentration of a component of a fluid flow, the sensor (10) comprising
- a substrate (14),
- at least one heater element (15) arranged on the substrate (14),
- at least one adsorbing layer (11) selected to adsorb the component,
- a control and energy supply element (13) for regulating a pulsed supply of energy to the heater element (15),
wherein the heater element (15) is in thermal contact with the adsorbing layer (11) such that a heat pulse during operation of the heater element (15) increases the temperature of the adsorbing layer (11) to a temperature level (T_high) equal or above a desorption temperature (T_desorp) of the component, **characterized in that** the sensor (10) further comprises
- at least one temperature sensor (40) in thermal contact with the adsorbing layer (11) for monitoring a temperature response of the adsorbing layer (11) to the heat pulse by measuring a temperature curve,
wherein the sensor (10) is configured to convert the temperature curve of the adsorbing layer (11) at or above the desorption temperature (T_desorp) into a parameter representative of the concentration of the component,
wherein the sensor (10) is configured to detect a carbon dioxide concentration and
wherein the sensor (10) is configured such that the desorption process at or above the desorption temperature (T_desorp) is an endothermal process such that energy is required to release the adsorbed component from the adsorbing layer (11).

2. The sensor of claim 1, wherein the control and energy supply element (13) is configured to register a deviation (ΔT(h), ΔT(l)) between a maximal temperature of the adsorbing layer (11) and a nominal maximal temperature in response to a heat pulse and to derive therefrom a parameter representative of a flow rate of the fluid flow.

3. The sensor (10) according to claim 1 or 2, wherein the control elements and energy supply element (13) is configured to regulate a pulsed supply of energy to the heater element (15) for generating heat pulses at at least two different levels with a pulse at a first level increasing during operation the temperature of the adsorbing layer (11) to a temperature (T_low) being below the desorption temperature (T_desorp) and a pulse at a second level increasing during operation the temperature of the adsorbing layer (11) to the temperature (T_high) equal or above the desorption temperature (T_desorp).

4. The sensor (10) according to claim 3, wherein the sensor (10) is designed to operate as a flow rate sensor at the first temperature level (T_low) and/or at the second temperature level (T_high) and as a component concentration sensor at the second temperature level (T_high) .

5. The sensor (10) according to any of the preceding claims, being configured to monitor a temperature or heat consumption profile (31) of the adsorbing layer (11) between the desorption temperature (T_desorp) and the operating temperature (T_high) and to convert the temperature or heat consumption profile (31) into a concentration measurement.

6. The sensor (10) according to any of the preceding claims, being configured to monitor a difference of a temperature or heat consumption profile (31) of the adsorbing layer (11) to a nominal temperature or heat consumption profile (30) at the first level temperature (T_low) and/or at the second temperature level (T_high) and to convert the difference into a flow rate measurement.

7. The sensor (10) according to any of the preceding claims, being configured to derive a concentration measurement and a flow rate measurement from measurements on the same thermal mass.

8. The sensor (10) according to any of the preceding claims, wherein the control and energy supply elements (13) are part of CMOS circuitry elements on a common substrate with the heater elements (15) and the adsorbing layer (11).

9. The sensor according to any of the preceding claims further comprising a readout circuit forming a Wheatstone bridge (40) or an equivalent thereof.

10. The sensor (10) according to any of the preceding claims, wherein the adsorbing layer (11) is located on a membrane part (12) of the substrate (14).

11. The sensor (10) according to any of the preceding claims, wherein the layer material of the adsorbing layer (11) comprises a zeolite, preferably a potassium-doped zeolite.

12. A sensor array comprising at least two sensors (10) of any of the preceding claims, wherein a concentration measurement and/or a flow rate measurement is derived from a measurement performed by a single sensor (10) .

13. A method of measuring a concentration of a component of a fluid flow, the method comprising the steps of
- letting the component being adsorbed onto a selective adsorbing layer (11),
- providing a desorption heat pulse to the adsorbing layer (11) to increase a temperature of the adsorbing layer (11) to a temperature (T_high) equal or above a desorption temperature (T_desorp) of the component from the adsorbing layer (11), **characterized by**
- monitoring a transient temperature curve as representative of a transient temperature response (31) of the adsorbing layer (11) to the desorption heat pulse, and
- deriving the concentration of the component from changes of the transient temperature curve (31) from a nominal temperature curve (30), wherein
the desorption process is an endothermal process such that energy is required to release the adsorbed component from the adsorbing layer (11).

14. The method of claim 13 wherein the measured concentration is a carbon dioxide concentration.

15. The method of any of the claims 13 or 14 further comprising the steps of
- providing an additional flow rate heat pulse to the adsorbing layer (11) to increase the temperature of the adsorbing layer (11) to a temperature (T_low) below the desorption temperature (T_desorp) of the component from the adsorbing layer (11),
- monitoring a representative of a transient temperature response (31) of the adsorbing layer (11) to the flow rate heat pulse, and
- deriving a flow rate of the component from the changes of the representative of the transient temperature response (31) from a nominal response (30).

16. The method of any of the claims 13 to 15 further comprising the step of
- using a single thermal mass as provided by the adsorbing layer (11) to measure the concentration of the flow component and the flow rate of the flow.

## Patentansprüche

1. Sensor (10) zur Bestimmung der Konzentration einer Komponente eines Fluidstroms, wobei der Sensor (10) umfasst
- ein Substrat (14),
- mindestens ein Heizelement (15), das auf dem Substrat (14) angeordnet ist,
- mindestens eine adsorbierende Schicht (11), die so ausgewählt ist, dass sie die Komponente adsorbiert,
- ein Steuer- und Energieversorgungselement (13) zum Regulieren einer gepulsten Energiezufuhr zu dem Heizelement (15),
wobei das Heizelement (15) in thermischem Kontakt mit der adsorbierenden Schicht (11) steht, so dass ein Heizpuls während des Betriebs des Heizelements (15) die Temperatur der adsorbierenden Schicht (11) auf ein Temperaturniveau (T_high) erhöht, das gleich oder höher ist als eine Desorptionstemperatur (T_desorp) der Komponente, **dadurch gekennzeichnet, dass** der Sensor (10) ferner umfasst
- mindestens einen Temperatursensor (40) in thermischem Kontakt mit der adsorbierenden Schicht (11) zum Überwachen einer Temperaturantwort der adsorbierenden Schicht (11) auf den Heizpuls durch Messen einer Temperaturkurve,
wobei der Sensor (10) konfiguriert ist, um die Temperaturkurve der adsorbierenden Schicht (11) bei oder oberhalb der Desorptionstemperatur (Tdesorp) in einen Parameter umzuwandeln, der für die Konzentration der Komponente repräsentativ ist,
wobei der Sensor (10) konfiguriert ist, um eine Kohlendioxidkonzentration zu detektieren und
wobei der Sensor (10) so konfiguriert ist, dass der Desorptionsprozess bei oder oberhalb der Desorptionstemperatur (T_desorp) ein endothermer Prozess ist, so dass Energie erforderlich ist, um die adsorbierte Komponente von der adsorbierenden Schicht (11) freizusetzen.

2. Sensor nach Anspruch 1, wobei das Steuerund Energieversorgungselement (13) so konfiguriert ist, dass es als Reaktion auf einen Heizpuls eine Abweichung (T(h), T(l)) zwischen einer Maximaltemperatur der adsorbierenden Schicht (11) und einer nominalen Maximaltemperatur registriert und daraus einen Parameter ableitet, der für eine Durchflussrate des Fluidstroms repräsentativ ist.

3. Sensor (10) nach Anspruch 1 oder 2, wobei das Steuer- und Energieversorgungselement (13) so konfiguriert ist, dass es eine gepulste Energiezufuhr zu dem Heizelement (15) zur Erzeugung von Heizpulsen auf mindestens zwei verschiedenen Niveaus regelt, wobei ein Impuls auf einem ersten Niveau die Temperatur der adsorbierenden Schicht während des Betriebs auf eine Temperatur (T_low) erhöht, die unter der Desorptionstemperatur (T_desorp) liegt, und ein Impuls auf einem zweiten Niveau die Temperatur der adsorbierenden Schicht (11) während des Betriebs auf eine Temperatur (T_high) erhöht, die gleich oder höher als die Desorptionstemperatur (T_desorp) ist.

4. Sensor (10) nach Anspruch 3, wobei der Sensor (10) so ausgelegt ist, dass er auf dem ersten Temperaturniveau (T_low) und/oder auf dem zweiten Temperaturniveau (T_high) als Durchflusssensor und auf dem zweiten Temperaturniveau (T_high) als Komponentenkonzentrationssensor arbeitet.

5. Sensor (10) nach einem der vorhergehenden Ansprüche, der ausgebildet ist, ein Temperatur- oder Wärmeverbrauchsprofil (31) der adsorbierenden Schicht (11) zwischen der Desorptionstemperatur (T_desorp) und der Betriebstemperatur (T_high) zu überwachen und das Temperatur- oder Wärmeverbrauchsprofil (31) in eine Konzentrationsmessung umzuwandeln.

6. Sensor (10) nach einem der vorhergehenden Ansprüche, der ausgebildet ist, eine Differenz eines Temperatur- oder Wärmeverbrauchsprofils (31) der adsorbierenden Schicht (11) zu einem Soll-Temperatur- oder Wärmeverbrauchsprofil (30) auf dem ersten Temperaturniveau (T_low) und/oder auf dem zweiten Temperaturniveau (T_high) zu überwachen und die Differenz in eine Durchflussratenmessung umzuwandeln.

7. Sensor (10) nach einem der vorhergehenden Ansprüche, der so konfiguriert ist, dass er eine Konzentrationsmessung und eine Durchflussratenmessung aus Messungen an derselben thermischen Masse ableitet.

8. Sensor (10) nach einem der vorhergehenden Ansprüche, wobei die Steuer- und Energieversorgungselemente (13) Teil von CMOS-Schaltungselementen auf einem gemeinsamen Substrat mit den Heizelementen (15) und der adsorbierenden Schicht (11) sind.

9. Sensor nach einem der vorangehenden Ansprüche umfassend ferner eine Ausleseschaltung, die eine Wheatstone-Brücke (40) oder ein Äquivalent davon bildet.

10. Sensor (10) nach einem der vorangehenden Ansprüche, wobei die adsorbierende Schicht (11) auf einem Membranteil (12) des Substrats (14) angeordnet ist.

11. Sensor (10) nach einem der vorhergehenden Ansprüche, wobei das Schichtmaterial der adsorbierenden Schicht (11) einen Zeolithen, vorzugsweise einen kaliumdotierten Zeolithen, umfasst.

12. Sensoranordnung mit mindestens zwei Sensoren (10) nach einem der vorhergehenden Ansprüche, wobei eine Konzentrationsmessung und/oder eine Durchflussratenmessung aus einer Messung eines einzelnen Sensors (10) abgeleitet wird.

13. Verfahren zur Messung einer Konzentration einer Komponente eines Fluidstroms, wobei das Verfahren die Schritte umfasst
- Zulassen der Adsorption der Komponente an eine selektive Adsorptionsschicht (11)
- Bereitstellen eines Desorptionsheizpulses für die adsorbierende Schicht (11), um eine Temperatur der adsorbierenden Schicht (11) auf eine Temperatur (T_high) zu erhöhen, die gleich oder höher als eine Desorptionstemperatur (T_desorp) der Komponente von der adsorbierenden Schicht (11) ist, **gekennzeichnet durch**
- Überwachen einer transienten Temperaturkurve als Repräsentant einer transienten Temperaturantwort (31) der adsorbierenden Schicht (11) auf den Desorptionsheizpuls, und
- Ableiten der Konzentration der Komponente aus Änderungen der transienten Temperaturkurve (31) von einer Soll-Temperaturkurve (30), wobei
der Desorptionsprozess ein endothermer Prozess ist, so dass Energie benötigt wird, um die adsorbierte Komponente von der adsorbierenden Schicht (11) freizusetzen.

14. Verfahren nach Anspruch 13, wobei die gemessene Konzentration eine Kohlendioxidkonzentration ist.

15. Das Verfahren nach einem der Ansprüche 13 oder 14, ferner umfassend die Schritte
- Bereitstellen eines zusätzlichen Durchflussraten-Heizpulses für die Adsorptionsschicht (11), um die Temperatur der Adsorptionsschicht (11) auf eine Temperatur (T_low) unterhalb der Desorptionstemperatur (T_desorp) der Komponente von der Adsorptionsschicht (11) zu erhöhen,
- Überwachen eines Repräsentanten einer transienten Temperaturantwort (31) der adsorbierenden Schicht (11) auf den Durchflussraten-Heizpuls, und
- Ableiten einer Durchflussrate der Komponente aus den Änderungen des Repräsentanten der transienten Temperaturantwort (31) von einer Sollantwort (30).

16. Verfahren nach einem der Ansprüche 13 bis 15, ferner umfassend den Schritt
- Verwendung einer einzelnen thermischen Masse, wie sie von der adsorbierenden Schicht (11) bereitgestellt wird, um die Konzentration der Stromkomponente und die Durchflussrate des Stroms zu messen.

## Revendications

1. Un capteur (10) pour déterminer la concentration d'un composant d'un écoulement de fluide, le capteur (10) comprenant
- un substrat (14),
- au moins un élément chauffant (15) disposé sur le substrat (14),
- au moins une couche absorbante (11) sélectionnée pour adsorber le composant,
- un élément de commande et d'alimentation en énergie (13) pour réguler une alimentation en énergie pulsée de l'élément chauffant (15),
l'élément chauffant (15) étant en contact thermique avec la couche absorbante (11) de telle sorte qu'une impulsion de chaleur pendant le fonctionnement de l'élément chauffant (15) augmente la température de la couche absorbante (11) à un niveau de température (T_high) égal ou supérieur à une température de désorption (T_desorp) du composant, **caractérisé en ce que** le capteur comprend en outre
- au moins un capteur de température (40) en contact thermique avec la couche absorbante (11) pour surveiller une réponse de température de la couche absorbante (11) à l'impulsion thermique,
le capteur (10) étant configuré pour convertir la réponse de température de la couche absorbante (11) à ou au-dessus de la température de désorption (T_desorp) en un paramètre représentatif de la concentration du composant,
le capteur (10) étant configuré pour détecter une concentration de dioxyde de carbone, et
le capteur (10) étant configuré de telle sorte que le processus de désorption à ou au-dessus de la température de désorption (T_desorp) est un processus endothermique tel que de l'énergie est requise pour libérer le composant adsorbé de la couche absorbante (11) .

2. Le capteur selon la revendication 1, dans lequel l'élément de commande et d'alimentation en énergie (13) est configuré pour enregistrer une déviation (T(h), T(l)) entre une température maximale de la couche absorbante (11) et une température maximale nominale en réponse à une impulsion thermique et pour en déduire un paramètre représentatif d'un débit de l'écoulement de fluide.

3. Le capteur (10) selon la revendication 1 ou 2, dans lequel l'élément de commande et d'alimentation en énergie (13) est configuré pour réguler une alimentation pulsée d'énergie à l'élément chauffant (15) pour générer des impulsions de chaleur à au moins deux niveaux différents avec une impulsion à un premier niveau augmentant pendant le fonctionnement la température de la couche absorbante (11) à une température (T_bas) inférieure à la température de désorption (T_desorp) et une impulsion à un second niveau augmentant pendant le fonctionnement la température de la couche absorbante (11) à la température (T_haut) égale ou supérieure à la température de désorption (T_desorp).

4. Le capteur (10) selon la revendication 3, le capteur (10) étant conçu pour fonctionner comme un capteur de débit au premier niveau de température (T_low) et/ou au second niveau de température (T_high) et comme un capteur de concentration de composants au second niveau de température (T_high).

5. Le capteur (10) selon l'une des revendications précédentes, étant configuré pour surveiller un profil de température ou de consommation de chaleur (31) de la couche absorbante (11) entre la température de désorption (T_desorp) et la température de fonctionnement (T_high) et pour convertir le profil de température ou de consommation de chaleur (31) en une mesure de concentration.

6. Le capteur (10) selon l'une des revendications précédentes, étant configuré pour surveiller une différence d'un profil de température ou de consommation de chaleur (31) de la couche absorbante (11) par rapport à un profil de température ou de consommation de chaleur nominal (30) au premier niveau de température (T_bas) et/ou au second niveau de température (T_haut) et pour convertir la différence en une mesure de débit.

7. Le capteur (10) selon l'une des revendications précédentes, étant configuré pour dériver une mesure de concentration et une mesure de débit à partir de mesures sur la même masse thermique.

8. Le capteur (10) selon l'une des revendications précédentes, dans lequel les éléments de commande et d'alimentation en énergie (13) font partie d'éléments de circuit CMOS sur un substrat commun avec les éléments chauffants (15) et la couche absorbante (11) .

9. Le capteur selon l'une quelconque des revendications précédentes, comprenant en outre un circuit de lecture formant un pont de Wheatstone (40) ou un équivalent de celui-ci.

10. Le capteur (10) selon l'une des revendications précédentes, dans lequel la couche absorbante (11) est disposée sur une partie membrane (12) du substrat (14).

11. Le capteur (10) selon l'une des revendications précédentes, dans lequel le matériau stratifié de la couche absorbante (11) comprend une zéolithe, de préférence une zéolithe dopée au potassium.

12. Un réseau de capteurs comprenant au moins deux capteurs (10) selon l'une des revendications précédentes, dans lequel une mesure de concentration et/ou une mesure de débit est dérivée d'une mesure effectuée par un seul capteur (10).

13. Un procédé de mesure d'une concentration d'un composant d'un écoulement de fluide, le procédé comprenant les étapes consistant à
- laisser le composant être adsorbé sur une couche d'adsorption sélective (11),
- fournir une impulsion thermique de désorption à la couche absorbante (11) pour augmenter la température de la couche absorbante (11) à une température (T_high) égale ou supérieure à une température de désorption (T_desorp) du composant de la couche absorbante (11),
- surveiller une courbe thermique transitoire (31) comme représentant d'une réponse transitoire de la couche absorbante (11) à l'impulsion thermique de désorption, et
- déduire la concentration du composant à partir des changements de la courbe thermique transitoire (31) à partir d'une courbe nominale (30),
le processus de désorption étant un processus endothermique tel que de l'énergie est nécessaire pour libérer le composant adsorbé de la couche absorbante (11).

14. Le procédé selon la revendication 13, dans lequel la concentration mesurée est une concentration de dioxyde de carbone.

15. Le procédé selon l'une des revendications 13 ou 14, comprenant en outre les étapes consistant à
- fournir une impulsion thermique de débit supplémentaire à la couche absorbante (11) pour augmenter la température de la couche absorbante (11) à une température (T_low) inférieure à la température de désorption (T_desorp) du composant de la couche absorbante (11),
- surveiller un représentant d'une réponse thermique transitoire (31) de la couche absorbante (11) à l'impulsion thermique de débit, et
- déduire un débit du composant à partir des changements du représentant de la réponse de température transitoire (31) à partir d'une réponse nominale (30).

16. Le procédé selon l'une des revendications 13 à 15, comprenant en outre l'étape consistant à
- utiliser une masse thermique unique telle que fournie par la couche absorbante (11) pour mesurer la concentration du composant de l'écoulement et le débit de l'écoulement.
